# EUROPEAN PATENT APPLICATION

(11) **EP 1 728 419 A1**
(43) Date of publication of application: **06.12.2006**
(21) Application number: 06011464.2
(22) Date of filing: 02.06.2006
(51) Int. Cl.: A01K 7/00, A01K 7/06

(54) **Water trough**

(30) Priority: 03.06.2005 DK 200500129
(71) Applicant: Skiold A/S, 7430 Ikast (DK)
(72) Inventor: Svendson, John, 8740 Braedstrup (DK)
(74) Representative: Nielsen, Leif

(57) **Abstract**

The present invention concerns water trough (1), preferably for a stable area, including a frame (3), a bowl (2) and a water supply pipe (6), where the bowl (2) and the water supply pipe (6) are connected with the frame (3) and arranged so that water can be conducted from the water supply pipe (6) to the bowl (2), where the bowl (2) is connected with the frame (3) by means of a number of links (4).

## Description

### Field of the Invention

The present invention concerns a water trough, preferably for a stable area, including a frame, a bowl and a water supply pipe, where the bowl and the water supply pipe are connected with the frame and arranged so that water can be conducted from the water supply pipe to the bowl.

### Background of the Invention

In pigsties there are provided a number of self-filling water troughs which for hygienic reasons are to be emptied from time to time, as the pigs are treading up in the water trough or leave faeces therein and thereby contaminate the water.

Presently, the water troughs are emptied manually. This means that the farmer is to go into all the pigsties in order to empty the water troughs, which is very time-consuming and less hygienic since bacteria are moved from sty to sty and between individual sectors.

### Object of the Invention

The purpose of the present invention is to indicate a water trough which is entirely or partially self-cleaning, or which can be remotely operated from the inspection gallery by means of a rod so that the farmer does not have to go into the sty.

This is achieved with an apparatus of the kind specified in the preamble of claim 1, where the bowl is connected with the frame by means of a number of links.

### Description of the Invention

The self-filling water trough includes a frame which is typically connected with the other partitioning members of the pigsty. The frame can be inserted between two sties, and therefor it is possible to access the water trough from both sides.

In an embodiment of the present invention, the frame can be designed as an upright frame which is not fastened to the other partitioning members of the pigsty, but may be freely disposed in the pigsty. The frame is designed with such weight and shape that the pigs cannot turn it over under violent play or in a fight about a water trough.

The bowl of the water trough, which is connected to the frame and disposed at a level above the floor in the pigsty, enables the pig to put its head in over the upper edge of the bowl so that it may drink water without being bothered by the upper edge of the bowl.

The bowl has a certain volume ensuring fresh water therein all the time. Due the shape of the bowl, the pigs can easily put the snout down into the bowl without jamming the snout or the ears.

The water supply pipe is connected to the frame and is typically arranged so that the water supply to the bowl occurs from a central position in the bowl or right above the bowl. This is an advantage when the water trough is used from e.g. two sides as the water supply pipe does not block a large part of the access space to the bowl.

In order to attain an entirely or partially self-cleaning water trough, the bowl is connected with the frame by means of a number of links, causing the bowl to tip at moderate impact or load, so that the water runs out of the bowl, whereafter clean water is automatically filled into the bowl.

The load required to tip the bowl corresponds to a pig treading up into the bowl, i.e. the bowl will not tip just because the pig touches it with the snout when drinking water.

As the pigs regularly walk up into the trough, the water is thus often replaced, and the water trough is therefore entirely or partly self-cleaning.

Since e.g. pigs are intelligent animals, they may possibly learn that the bowl tips when they act on the bowl which is subsequently filled with fresh water.

In a preferred embodiment of the present invention, each link includes a number of elastic bodies providing that the bowl is connected with the frame all the time, but which at the same time may tip so much that the water can run out of the bowl.

The elastic bodies may be one or more of the following:
- a spring, e.g. a helical spring, or
- an elastic material, e.g. a rod of a rubber material.

It is important that these elastic bodies in this embodiment are designed so that they may be stretched and bent without being deformed.

In an alternative embodiment of the present invention, each link furthermore includes a pivot joint, whereby the bowl turns around the fixed point on the frame to which the pivot joint is connected.

In order to ensure that the bowl returns to the initial position, the elastic body may e.g. be a torsion spring or similar.

In order to protect the pigs' tails, ears and snouts, each link is entirely or partly provided with a protective unit, entailing that the pigs' tails, ears and snouts do not jam in the elastic bodies and/or pivot joints. This protective unit may e.g. be a tube or a hard plastic hose enclosing the elastic body.

In the water supply pipe there may be mounted a valve connecting the water supply pipe with a drip watering pipe. Hereby it is possible to conduct a small amount of water to the water trough where it drips down into the water. In this way is provided a moving water surface that attracts the pigs, which are then more quickly learning to use the water trough and the drinking nipple. This is particularly important when the pigs are very small. It is important that they get water, and since the water surface is moving, they learn rapidly to operate the drinking nipple. The valve enables choosing if one wants to use the drip watering function and adjust the amount of water through the drip watering pipe.

In order that the pigs can go in the same sty for a longer period of time, each link is connected to the frame in a replaceable and/or height adjustable way, providing
- that the elastic bodies can be substituted so that the required moderate load on the bowl is adapted to the size and weight of the pig;
- that the bowl can be substituted so that the volume and accessibility of the bowl may be adapted to the pig's size and weight; and
- that the bowl can be arranged at a suitable level above the floor in the pigsty.

### Description of the Drawing

In the following, the invention will be explained in more detail with reference to the enclosed drawing where:
Fig. 1 shows a side view of a water trough according to the invention;
Fig. 2 shows a front view of a water trough according to the invention; and
Fig. 3 shows a view of a further embodiment of a water trough according to the invention.

### Detailed Description of the Invention

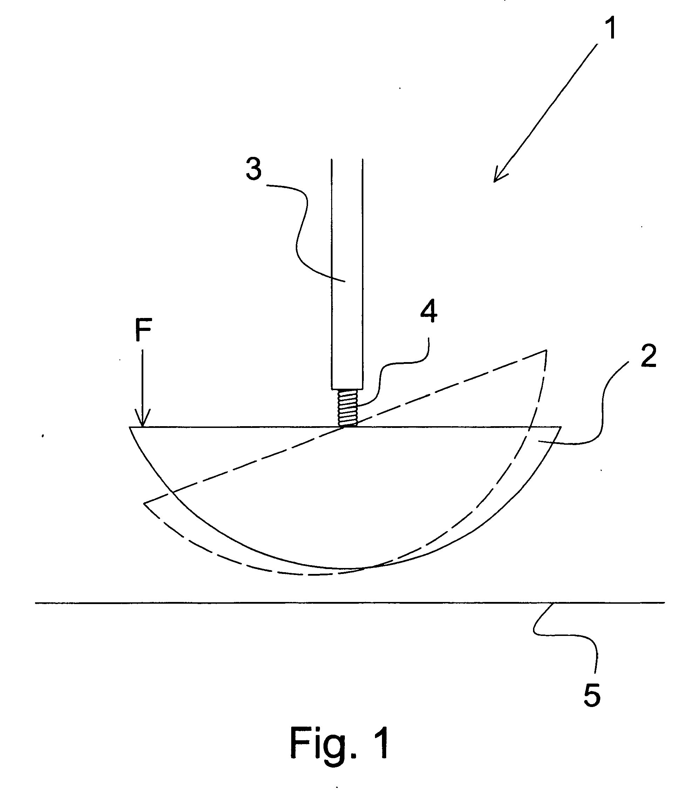

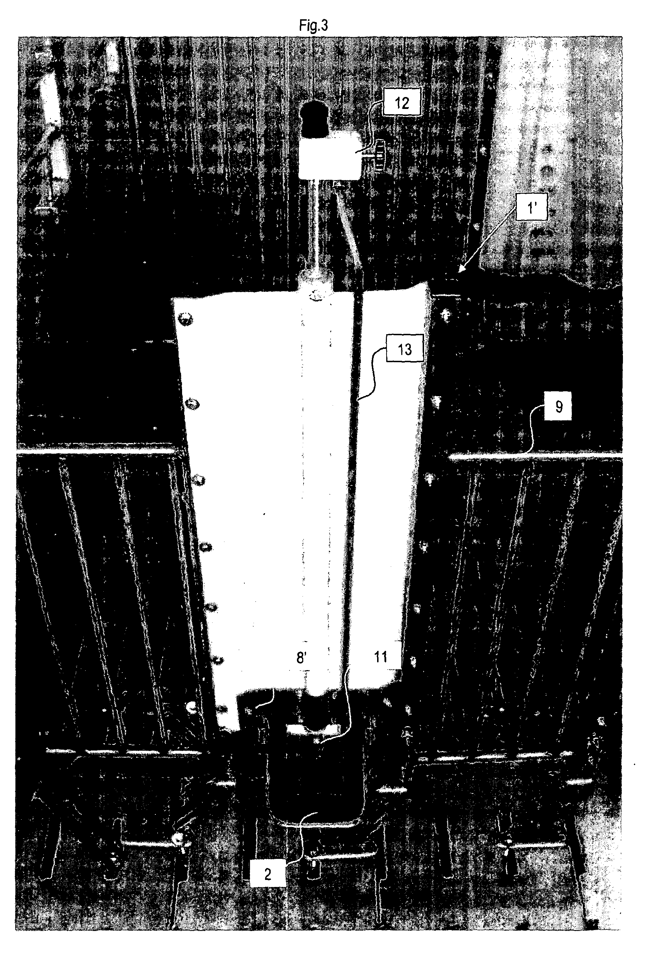

Fig. 1 shows a side view of a water trough 1 including a bowl 2, a frame 3 and a water supply pipe 10 (see Fig. 3), where the bowl 2 is connected to the frame 3 by means of link, here appearing in the form of a helical spring 4. The bowl 2 is disposed slightly elevated over the floor 5. When acting with a downwards force F, the bowl 2 will tip (shown with stippled line) so that water can run out of the bowl 2.

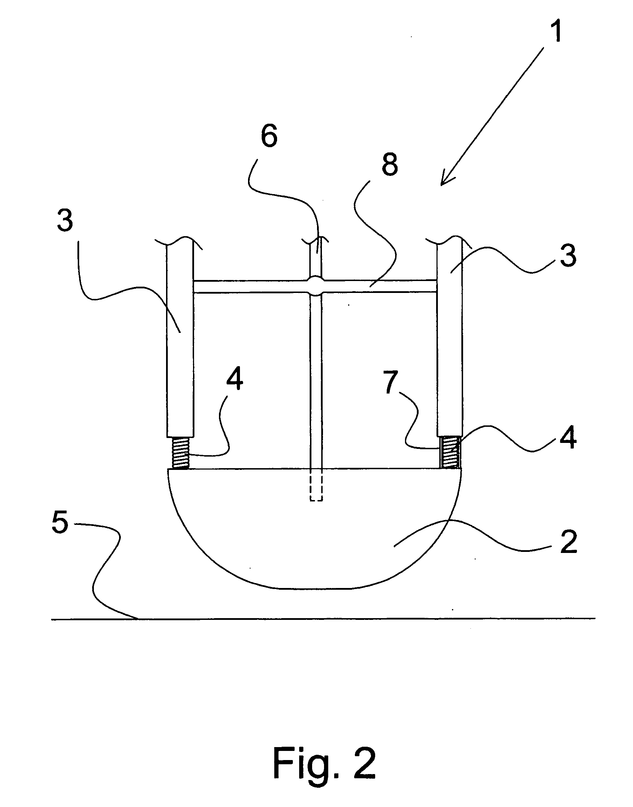

Fig. 2 shows a front view of the water trough 1, from which appears that the bowl 2 is connected with the frame 3 by means of two links, here shown in the form a helical spring 4. The water supply pipe 6 is connected with the frame 3 via crossbar 8 and arranged so that the water is supplied to the bowl 2 at a central position and down in the bowl 2. Around the right helical spring 4, there is provided a protective unit 7, here in the form of a flexible pipe, which ensures that the pigs do not get their snout, ears or tail jammed in helical spring 4.

Fig. 3 shows a view of the water trough 1', where the bowl 2 via the springs 4 are connected with a frame 3' constituting a part of a partitioning 9 between two sties, where the animals can use the water trough 1'. It appears that the water supply pipe 10 which is provided with a drinking nipple 11, is mounted on a plate-shaped crossbar 8', which is connected with the frame 3'.

In the water supply pipe 10, a valve 12 is mounted, connecting the water supply pipe with a drip watering pipe 13, whereby it is possible to conduct a small amount of water to the water trough 1', where it drips down into the water. In this way is provided a moving water surface that attracts the pigs, which are then more quickly learning to use the water trough and the drinking nipple 11. This is particularly important when the pigs are very small. It is important that they get water, and since the water surface is moving, they learn rapidly to operate the drinking nipple 11. The valve 12 enables choosing if one wants to use the drip watering function and adjust the amount of water through the drip watering pipe.

## Claims

1. A water trough (1), preferably for a stable area, including a frame (3), a bowl (2) and a water supply pipe (6), where the bowl (2) and the water supply pipe (6) are connected with the frame (3) and arranged so that water can be conducted from the water supply pipe (6) to the bowl (2), **characterised in that** the bowl (2) is connected with the frame (3) by means of a number of links (4).

2. Water trough (1) according to claim 1, **characterised in that** each link (4) includes a number of elastic bodies.

3. Water trough (1) according to claim 2, **characterised in that** each link (4) includes a pivot joint.

4. Water trough (1) according to claim 2 or 3, **characterised in that** each link (4) is entirely or partly provided with a protective unit (7).

5. Water trough (1) according to any of claims 1 -4, **characterised in that** each link (4) is connected to the frame (3) in a replaceable and/or height adjustable way.
